# EUROPÄISCHE PATENTSCHRIFT

(11) **EP 3 676 045 B1**
(45) Veröffentlichungstag und Bekanntmachung des Hinweises auf die Patenterteilung: **05.01.2022**
(21) Anmeldenummer: 18773343.1
(22) Anmeldetag: 03.09.2018
(51) Int. Cl.: B23K 26/03, B23K 26/53

(54) **LASERBEARBEITUNG EINES TRANSPARENTEN WERKSTÜCKS**
LASER MACHINING A TRANSPARENT WORKPIECE
USINAGE AU LASER D'UNE PIÈCE TRANSPARENTE

(30) Priorität: 01.09.2017 DE 102017120187; 13.09.2017 DE 102017121140
(43) Veröffentlichungstag der Anmeldung: 08.07.2020
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: BERGNER, Klaus, 07745 Jena (DE); NOLTE, Stefan, 07751 Jena (DE)
(74) Vertreter: Schneiders & Behrendt Bochum
(86) Internationale Anmeldenummer: PCT/EP2018/073604
(87) Internationale Veröffentlichungsnummer: WO 2019/043220

(56) Entgegenhaltungen:
- EP-A1- 1 338 371
- US-A1- 2016 009 066

## Beschreibung

Die Erfindung betrifft ein Verfahren zur Bearbeitung eines transparenten Werkstücks durch Erzeugung nicht-linearer Absorption von Laserstrahlung in einem im Volumen des Werkstücks befindlichen Laserstrahlfokus.

Außerdem betrifft die Erfindung eine Vorrichtung zur Bearbeitung eines transparenten Werkstücks.

Es ist aus dem Stand der Technik bekannt, dass Werkstücke aus transparenten Materialien, wie z. B. Glas oder Quarz oder auch (unpigmentiertes) Körpergewebe, durch Laserstrahlung hoch präzise bearbeitet werden können. Dies erfolgt im Wege einer lokalisierten Energiedeponierung durch nicht-lineare Absorption in einem Laserstrahlfokus, der sich nicht (nur) an der Oberfläche, sondern an einer beliebigen Position im Volumen des Werkstücks befinden kann. In dem Laserstrahlfokus kommt es zu Mehrphotonenprozessen, z.B. in Form von Multiphotonenionisation oder Lawinenionisation, die zur Ausbildung eines Plasmas führen. Die Plasmabildungsrate nimmt oberhalb einer Schwelle, die von dem Material des Werkstücks und den Parametern der Laserstrahlung abhängt, stark zu. Man spricht daher auch von einem "optischen Durchbruch". Die dadurch bewirkte Modifikation und damit Bearbeitung des Materials weist eine hohe Präzision auf, da räumlich lokalisiert reproduzierbar geringe Energiemengen in das Material eingetragen werden können. Die gute räumliche Lokalisation wird in erster Linie durch Fokussierung der Laserstrahlung mittels einer möglichst aberrationsfreien Einkoppeloptik hoher numerischer Apertur erreicht. Insbesondere ist es auch möglich, die Lage und Form der Energiedeponierung aufgabenspezifisch anzupassen. Dazu können z.B. Linsen mit geringer numerischer Apertur, Axikone oder Kombinationen daraus ebenso wie gezielt Aberrationen genutzt werden, um beispielsweise ausgedehnte Fokusvolumina in Laserpropagationsrichtung zu erzeugen.

Im Allgemeinen wird bei dieser Art der Materialbearbeitung durch nicht-lineare Absorption gepulste Laserstrahlung bestehend aus kurzen oder ultrakurzen Laserpulsen bei gleichzeitig hoher Pulsleistung verwendet. Dadurch lässt sich ein geringer Energieeintrag bei hoher Reproduzierbarkeit erreichen. Besonders vorteilhaft sind Laserpulse mit einer Pulsdauer im Bereich von einigen Femtosekunden bis zu wenigen Pikosekunden. Die Pulsenergie liegt meist im Bereich von einigen Mikrojoule, für ausgedehnte Fokusvolumina im Bereich von einigen 10-100 Mikrojoule oder sogar im Millijoulebereich.

Laserbasierte Materialbearbeitung wird im Stand der Technik z.B. dazu verwendet, Trennflächen oder Sollbruchstellen zum Zwecke der Glasseparation, d.h. zum Trennen mehrerer zusammenhängender Werkstücke aus Glas zu erzeugen. Dabei spielt eine gleichmäßige Modifikation des Materials über die gesamte Dicke des Werkstücks eine wichtige Rolle. Dadurch wird z.B. die Brechbarkeit erleichtert, Produktionsfehler wie Ausplatzungen oder Spannungsunterschiede werden minimiert, und es werden höhere Kantenfestigkeiten erzielt. Die zu bearbeitenden Glasmaterialien sind dabei im Allgemeinen über einen weiten Wellenlängenbereich der verwendeten Laserstrahlung transparent. Sobald aber spezielle Gläser (z.B. Filtergläser) oder Glasverbundwerkstoffe, bei denen unterschiedliche Gläser miteinander kombiniert sind oder Hilfsschichten (wie Folien oder Kleber) im Werkstück vorhanden sind, können diese Materialien eine signifikante lineare Absorption für die eingesetzte Laserstrahlung aufweisen. Diese kann die gewünschte nicht-lineare Wechselwirkung behindern bzw. eine gleichmäßige Energiedeponierung über die gesamte Werkstückdicke (entsprechend dem Beer-Lambert'schen Gesetz) verhindern.

Die EP1338371 stellt die Basis für den Oberbegriff des Anspruchs 1 dar, und beschreibt ein Laserstrahl-Bearbeitungsverfahren und eine Laserstrahl-Bearbeitungsvorrichtung, die in der Lage sind, ein Werkstück zu schneiden, ohne eine Verschmelzung und ein Herausbrechen aus einer vorbestimmten Schnittlinie auf der Oberfläche des Werkstücks zu erzeugen, wobei ein Impulslaserstrahl auf die vorbestimmte Schnittlinie auf der Oberfläche des Werkstücks unter solchen Bedingungen ausgestrahlt wird, dass eine Mehrfachphotonenabsorption erfolgt. Dabei ist der Fokus des Laserstrahls auf das Innere des Werkstücks ausgerichtet, und ein modifizierter Bereich wird innerhalb des Werkstücks entlang der vorbestimmten Schnittlinie gebildet, indem der Fokus entlang der vorbestimmten Schnittlinie bewegt wird. So kann das Werkstück mit einer geringen Kraft geschnitten werden, indem das Werkstück entlang der vorbestimmten Schnittlinie ausgehend von dem modifizierten Bereich gebrochen wird. Es wird dafür Sorge getragen, dass der abgestrahlte Impulslaserstrahl nicht schon an der Oberfläche des Werkstücks absorbiert wird, d.h. die Oberfläche nicht verschmolzen wird, während der modifizierte Bereich gebildet wird.

Aus der US2016/009066 A1 (Basis für den Oberbegriff des Anspruchs 8) sind ein System und ein Verfahren zur Verarbeitung einer laminierten Struktur mit einer Vielzahl von Laminatschichten bekannt. Das System umfasst eine Laseranordnung, die eine Vielzahl von Laser-Burst-Emissionen mit vorbestimmten Lasereigenschaften bereitstellt, und eine optische Anordnung, die jede Laser-Burst-Emission auf eine vorbestimmte Brennlinie fokussiert. Das Verfahren wählt die Lasereigenschaften und Brennlinienparameter für jede Laser-Burst-Emission so aus, dass ein Defekt mit vorbestimmten Abmessungen an einer vorbestimmten Stelle innerhalb der laminierten Struktur gebildet wird. Die laminierte Struktur bewegt sich in Bezug auf die optische Anordnung derart, dass die Vielzahl von Laser-Burst-Emissionen eine Vielzahl der genannten Defekte bildet, die einem mehrdimensionalen Defektmuster innerhalb der laminierten Struktur entsprechen, wobei jeder der genannten Defekte im Wesentlichen durch induzierte Absorption erzeugt wird.

Vor diesem Hintergrund ist es Aufgabe der Erfindung, ein hinsichtlich Präzision und Qualität verbessertes Verfahren und eine entsprechende Vorrichtung für die Laserbearbeitung von Werkstücken bereit zu stellen. Insbesondere sollen auch Werkstücke aus Verbundmaterialien oder aus sonstigen Spezialmaterialien, wie z.B. Filtergläser, mit verbesserter Qualität bearbeitet werden können.

Diese Aufgabe löst die Erfindung durch ein Verfahren gemäß Anspruch 1 und durch eine Vorrichtung gemäß Anspruch 8.

Erfindungsgemäß erfolgt vor der eigentlichen Bearbeitung eine spektroskopische Vermessung des Werkstücks, um einen idealen Wellenlängenbereich für die Arbeitswellenlänge zu identifizieren, in dem eine minimale, jedenfalls aber möglichst geringe lineare Absorption der eingesetzten Laserstrahlung auftritt.

Durch die Unterdrückung oder Minimierung der linearen Absorption kann mittels Strahlfokussierung eine hohe Intensität in den gewünschten Wechselwirkungsbereichen erzielt werden. Dadurch kommt es nur in diesen Bereichen zu einer vorwiegend nicht-linearen Absorption. Bei entsprechender Strahlformung erlaubt dies eine gleichmäßige, maßgeschneiderte Energiedeposition über die gesamte Dicke des Werkstücks. Unerwünschte Defekte wie Spannungen, Risse, Voids etc. werden vermieden bzw. gleichmäßig oder spezifisch über die Substratdicke verteilt.

Idealerweise sollte die lineare Absorption in dem Material des Werkstücks unterhalb von 20%, besser noch unterhalb von 10% auf einer Länge von einem Zentimeter in Laserstrahlrichtung liegen.

Das Ergebnis der Vermessung kann bei der Auswahl der Arbeitswellenlänge auch so verwendet werden, dass die erhaltene Transmissionskurve bei der Arbeitswellenlänge ein Maximum aufweist.

Nach der Vermessung erfolgt die Bearbeitung des Werkstücks im ausgewählten Wellenlängenbereich.

Die gewünschte Arbeitswellenlänge kann durch Frequenzkonversion (z.B. Erzeugung der zweiten oder einer höheren Harmonischen, optisch parametrische Konversion, Frequenzmischung, Superkontinuumserzeugung, Raman-Konversion etc.) entsprechend eingestellt werden.

Für die praktische Umsetzung der Erfindung geeignete, hinsichtlich der Wellenlänge durchstimmbare Lasersysteme sind kommerziell verfügbar.

Der durchstimmbare Laser wird nach der Erfindung gleichzeitig auch für die Vermessung der linearen Absorption verwendet. Es wird einfach für verschiedene Wellenlängeneinstellungen die Transmission der Laserstrahlung gemessen, und zwar möglichst ohne Fokussierung der Laserstrahlung im Volumen des Werkstücks.

Bei einer bevorzugten Ausgestaltung des erfindungsgemäßen Verfahrens wird die Arbeitswellenlänge nach der Nebenbedingung ausgewählt, dass die nicht-lineare Absorption bei der Arbeitswellenlänge möglichst hoch ist. Das bedeutet, mit anderen Worten, dass die erfindungsgemäße Vermessung des Werkstücks vor der eigentlichen Bearbeitung zusätzlich dazu genutzt werden kann, um eine besonders geeignete Wellenlänge auch für die nicht-lineare Absorption auszuwählen. Dazu wird zweckmäßig anhand der Transmissionskurve die Arbeitswellenlänge so gelegt, dass die Absorption bei der Arbeitswellenlänge selbst minimal ist, jedoch bei einer Harmonischen davon (d.h. bei einem Bruchteil der Arbeitswellenlänge: z.B. 1/2, 1/3, 1/4 etc.) einen hohen Wert annimmt. Durch entsprechende Wahl der Arbeitswellenlänge kann somit der Grad der Nichtlinearität in der Absorption gewählt werden und dadurch die nichtlineare Bearbeitung angepasst werden. Werden z.B. bei einer bestimmten Arbeitswellenlänge zwölf Photonen zur Überwindung einer Bandlücke des Materials benötigt, um freie Elektronen (Ionisation) zu erzeugen, ist die Wahrscheinlichkeit für eine solche Multiphotonenabsorption relativ gering. Eine Anpassung der Arbeitswellenlänge, immer noch im Bereich geringer linearer Absorption des Materials des Werkstücks, führt zu einer höheren lonisationswahrscheinlichkeit, wenn bei der geänderten Arbeitswellenlänge beispielsweise nur noch sechs, vier oder zwei Photonen zur Ionisation benötigt werden.

Das erfindungsgemäße Verfahren eignet sich besonders zur Separation von Glaswerkstücken, wobei die Position des Laserfokus während der Bearbeitung zwischen zwei oder mehr zusammenhängenden Glaswerkstücken entlang einer Trennfläche oder einer Sollbruchstelle geführt wird. Bei den Glaswerkstücken kann es sich z.B. um optische Filtergläser oder auch um Automobil(front)scheiben (z.B. mit lichtabsorbierender Tönung oder laminierten Zwischenschichten) oder sonstige Spezialgläser in der Optikindustrie handeln. Durch das erfindungsgemäße Verfahren wird ein anschließendes Brechen vereinfacht, und Produktionsfehler werden minimiert.

Weitere Merkmale, Einzelheiten und Vorteile der Erfindung ergeben sich aus dem Wortlaut der Ansprüche sowie aus der nachfolgenden Beschreibung eines Ausführungsbeispielen anhand der Figur. Es zeigt:

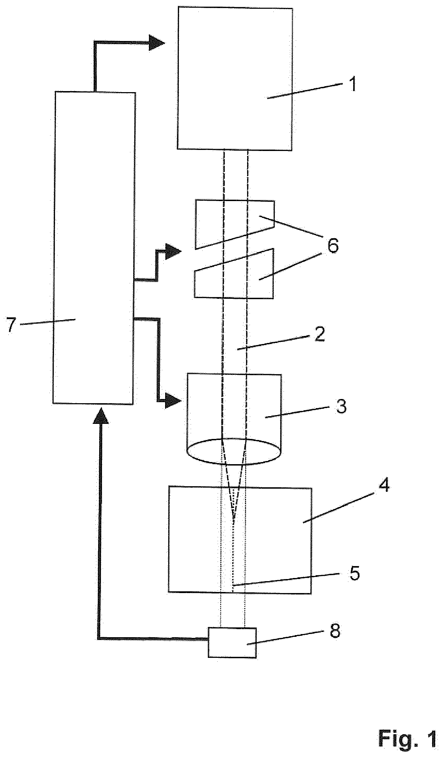

- Figur 1: schematisch eine erfindungsgemäße Vorrichtung als Blockdiagramm.

Die in der Figur 1 gezeigte Vorrichtung umfasst einen Laser 1, der Laserstrahlung 2 emittiert. Der Laser 1 ist hinsichtlich der Wellenlänge der Laserstrahlung durchstimmbar. Die Laserstrahlung 2 wird mittels eines Objektivs 3 in Richtung auf ein Werkstück 4 gerichtet. Das Werkstück 4 besteht z.B. aus einem Spezialglas. Es kann sich z.B. um ein optisches Filterglas handeln. In das Werkstück 4 soll eine Trennfläche 5 durch Laserbearbeitung eingebracht werden. Das Objektiv 3 fokussiert die Laserstrahlung 2 so, dass die Fokusposition innerhalb des Volumens des Werkstücks 4 auf der Trennfläche 5 liegt. Dabei ist eine steuerbare optische Baugruppe 6 vorgesehen, um die Strahllage in einer Ebene senkrecht zur Richtung des Laserstrahls 2 (d.h. in x-und y-Richtung) zu variieren. Das Objektiv 3 und die Baugruppe 6 bilden zusammen eine Einkoppeloptik, die den Laserstrahl 2 in das Volumen des Werkstücks 4 einkoppelt. Die Brennweite des Objektivs 3 ist ebenfalls variabel ansteuerbar. Insgesamt kann so die Fokusposition in drei Dimensionen, d.h. in x-, y- und z-Richtung variiert werden. Bei einer alternativen Ausgestaltung kann die Position des Werkstücks 4 relativ zur Optik bewegt werden. Die Einkoppeloptik ist mit einer programmgesteuerten Steuereinrichtung 7 verbunden. Die programmgesteuerte Steuereinrichtung 7 steuert das Objektiv 3 und die Ablenkeinrichtung 6 an, um die Fokusposition während der Bearbeitung zu variieren. Dabei ist die programmgesteuerte Steuereinrichtung 7 dazu eingerichtet, durch nicht-lineare Absorption des Laserstrahls 2 im Fokus ein vorgegebenes Modifikationsprofil innerhalb des Werkstücks 4 zu erzeugen, und zwar entlang der Trennfläche 5. Die programmgesteuerte Steuereinrichtung 7 steuert auch den Laser 1 an, um diesen für die Erzeugung der Laserstrahlung jeweils ein- und auszuschalten. Des Weiteren umfasst die Vorrichtung als Messeinrichtung einen Fotodetektor 8, der mit der Steuereinrichtung 7 verbunden ist. Die Steuereinrichtung 7 kann das Objektiv 3 so ansteuern, dass der Laserstrahl 2 nicht innerhalb des Werkstücks 4 fokussiert ist, sondern durch das Werkstück 4 transmittiert wird. Der transmittierte Laserstrahl 2 fällt dann auf den Fotodetektor 8. Durch Variation der Wellenlänge des Lasers 1, durch entsprechende Ansteuerung mittels der Steuereinrichtung 7, kann eine Transmissionskurve des Werkstücks 4 aufgenommen werden, um erfindungsgemäß vor der eigentlichen Bearbeitung die lineare Absorption der Laserstrahlung in dem Material des Werkstücks 4 spektral zu vermessen. Die Steuereinrichtung 7 stellt dann die Arbeitswellenlänge des Lasers 1, d.h. die während der Bearbeitung zu verwendende Wellenlänge, nach Maßgabe der gemessenen Transmissionskurve auf einen Wert ein, bei der die lineare Absorption weniger als 10% pro Zentimeter in Richtung des Laserstrahls 2 beträgt. Zur spektroskopischen Vermessung der linearen Absorption kann der Laser 1 so angesteuert werden, dass er mit reduzierter Intensität emittiert, z.B. durch Reduktion der Leistung einer verwendeten Pumplichtquelle. Bei einer alternativen Ausgestaltung erfolgt die spektroskopische Vermessung ex-situ, z.B. mittels eines separaten Weißlichtspektrometers. Während der Bearbeitung emittiert der Laser 1 den Laserstrahl 2 dann mit einer höheren Intensität, bei der in dem Laserstrahlfokus nicht-lineare Absorption, insbesondere Ionisation auftritt.

## Patentansprüche

1. Verfahren zur Bearbeitung eines transparenten Werkstücks (4) durch Erzeugung nicht-linearer Absorption von Laserstrahlung in einem im Volumen des Werkstücks (4) befindlichen Laserstrahlfokus, umfassend die folgenden Schritte: spektroskopische Vermessung der linearen Absorption der Laserstrahlung in dem Werkstück (4) - Auswahl einer Arbeitswellenlänge, bei der die lineare Absorption der Laserstrahlung in dem Werkstück (4) gering ist, und - Bearbeiten des Werkstücks (4) durch Applikation von Laserstrahlung bei der Arbeitswellenlänge mittels eines hinsichtlich der Wellenlänge durchstimmbaren Lasers (1), **dadurch gekennzeichnet, dass** die Bearbeitung des Werkstücks (4) mittels eines hinsichtlich der Wellenlänge durchstimmbaren Lasers erfolgt, und die spektroskopische Vermessung ebenfalls mittels des hinsichtlich der Wellenlänge durchstimmbaren Lasers (1) erfolgt.

2. Verfahren nach Anspruch 1, **dadurch gekennzeichnet, dass** die Arbeitswellenlänge nach der Maßgabe ausgewählt wird, dass bei der Arbeitswellenlänge die lineare Absorption in Laserstrahlrichtung weniger als 20% pro Zentimeter, vorzugsweise weniger als 10% pro Zentimeter beträgt.

3. Verfahren nach Anspruch 1 oder 2, **dadurch gekennzeichnet, dass** die aus der Vermessung der linearen Absorption resultierende Transmissionskurve bei der Arbeitswellenlänge ein Minimum aufweist.

4. Verfahren nach einem der Ansprüche 1 bis 3, **dadurch gekennzeichnet, dass** die Intensität der Laserstrahlung bei der Vermessung des Werkstücks (4) unterhalb einer Schwelle bleibt, bei der lonisationsprozesse in dem Volumen des Werkstücks (4) auftreten.

5. Verfahren nach einem der Ansprüche 1 bis 4, **dadurch gekennzeichnet, dass** die Laserstrahlung gepulst ist, wobei die Pulsdauer der Laserpulse 10 fs bis 100 ps beträgt.

6. Verfahren nach einem der Ansprüche 1 bis 5, **dadurch gekennzeichnet, dass** die Arbeitswellenlänge nach der Nebenbedingung ausgewählt wird, dass die Absorption bei einer Harmonischen der Arbeitswellenlänge möglichst hoch ist.

7. Verwendung des Verfahrens nach einem der Ansprüche 1 bis 7 zur Separation von Glaswerkstücken, wobei die Position des Laserfokus während der Bearbeitung zwischen zwei oder mehr zusammenhängenden Glaswerkstücken entlang einer Trennfläche oder einer Sollbruchstelle geführt wird.

8. Vorrichtung zur Bearbeitung eines transparenten Werkstücks (4), mit
- einem Laser (1), der einen Laserstrahl (2) bei einer einstellbaren Arbeitswellenlänge emittiert, und
- einer Einkoppeloptik (3, 6), die den Laserstrahl (2) in das Volumen des Werkstücks (4) einkoppelt und in einem im Volumen des Werkstücks (4) befindlichen Laserstrahlfokus fokussiert,
**gekennzeichnet durch**
- eine Messeinrichtung (8), die die lineare Absorption der Laserstrahlung in dem Werkstück (4) misst, und
- eine mit dem Laser (1), der Messeinrichtung (8) und der Einkoppeloptik (3, 6) verbundenen Steuereinrichtung (7), die dazu eingerichtet ist, die Arbeitswellenlänge auf einen Wert einzustellen, bei der die lineare Absorption gering ist, und die Position des Laserstrahlfokus während der Bearbeitung des Werkstücks (4) zu variieren.

9. Vorrichtung nach Anspruch 8, **dadurch gekennzeichnet, dass** der Laser (1) den Laserstrahl (2) bei der Bearbeitung mit einer Intensität emittiert, bei der in dem Laserstrahlfokus nicht-lineare Absorption, insbesondere Ionisation auftritt.

## Claims

1. Method for machining a transparent workpiece (4) by generating non-linear absorption of laser radiation in a laser beam focus located in the volume of the workpiece (4), comprising the following steps:
- spectroscopically measuring the linear absorption of the laser radiation in the workpiece (4),
- selecting a working wavelength at which the linear absorption of the laser radiation in the workpiece (4) is low, and
- machining the workpiece (4) by applying laser radiation at the working wavelength by means of a laser (1) that is tunable with respect to the wavelength,
**characterised in that** the machining of the workpiece (4) takes place by means of a laser that is tunable with respect to the wavelength, and the spectroscopic measuring also takes place by means of the laser (1) that is tunable with respect to the wavelength.

2. Method according to claim 1, **characterised in that** the working wavelength is selected in accordance with the stipulation that, at the working wavelength, the linear absorption in the laser beam direction is less than 20% per centimetre, preferably less than 10% per centimetre.

3. Method according to claim 1 or 2, **characterised in that** the transmission curve resulting from the measurement of the linear absorption exhibits a minimum at the working wavelength.

4. Method according to one of claims 1 to 3, **characterised in that** the intensity of the laser radiation during measurement of the workpiece (4) remains below a threshold at which ionisation processes occur in the volume of the workpiece (4).

5. Method according to one of claims 1 to 4, **characterised in that** the laser radiation is pulsed, wherein the pulse duration of the laser pulse is from 10 fs to 100 ps.

6. Method according to one of claims 1 to 5, **characterised in that** the working wavelength is selected in accordance with the secondary condition that the non-linear absorption should be as high as possible at a harmonic of the working wavelength.

7. Use of the method according to one of claims 1 to 6 for separating glass workpieces, wherein the position of the laser focus is guided, during the machining, between two or more connected glass workpieces along a separation plane or a predetermined breaking point.

8. Device for machining a transparent workpiece (4), comprising
- a laser (1) that emits a laser beam (2) at an adjustable working wavelength, and
- a coupling optic (3, 6) that couples the laser beam (2) into the volume of the workpiece (4) and focuses said beam in a laser beam focus located in the volume of the workpiece (4),
**characterised by**
- a measuring device (8) that measures the linear absorption of the laser radiation in the workpiece (4), and
- a controller (7) that is connected to the laser (1), the measuring device (8) and the coupling optic (3, 6), which controller is designed to set the working wavelength to a value at which the linear absorption is low and to vary the position of the laser beam focus during the machining of the workpiece (4).

9. Device according to claim 8, **characterised in that**, during the machining, the laser (1) emits the laser beam (2) with an intensity at which non-linear absorption, in particular ionisation, occurs in the laser beam focus.

## Revendications

1. Procédé d'usinage d'une pièce (4) transparente en produisant une absorption non linéaire d'un rayonnement laser dans un foyer de faisceau laser se trouvant dans le volume de la pièce (4), comprenant les étapes suivantes :
- mesure par spectroscopie de l'absorption linéaire du rayonnement laser dans la pièce (4),
- sélection d'une longueur d'onde de travail, à laquelle l'absorption linéaire du rayonnement laser dans la pièce (4) est modérée, et
- usinage de la pièce (4) par application du rayonnement laser à la longueur d'onde de travail au moyen d'un laser (1) variable en termes de longueur d'onde,
**caractérisé en ce que** l'usinage de la pièce (4) est effectué au moyen d'un laser variable en termes de longueur d'onde, et la mesure par spectroscopie est effectuée également au moyen du laser (1) variable en termes de longueur d'onde.

2. Procédé selon la revendication 1, **caractérisé en ce que** la longueur d'onde de travail est sélectionnée à la condition qu'à la longueur d'onde de travail, l'absorption linéaire dans le sens du faisceau laser soit inférieure à 20 % par centimètre, de préférence inférieure à 10 % par centimètre.

3. Procédé selon la revendication 1 ou 2, **caractérisé en ce que** la courbe de transmission résultant de la mesure de l'absorption linéaire présente à la longueur d'onde de travail une valeur minimale.

4. Procédé selon l'une quelconque des revendications 1 à 3, **caractérisé en ce que** l'intensité du rayonnement laser reste lors de la mesure de la pièce (4) inférieure à un seuil, auquel des processus d'ionisation se produisent dans le volume de la pièce (4).

5. Procédé selon l'une quelconque des revendications 1 à 4, **caractérisé en ce que** le rayonnement laser est pulsé, dans lequel la durée d'impulsion des impulsions laser vont de 10 fs à 100 ps.

6. Procédé selon l'une quelconque des revendications 1 à 5, **caractérisé en ce que** la longueur d'onde de travail est choisie selon la condition secondaire, aux termes de laquelle l'absorption est aussi élevée que possible à un harmonique de la longueur d'onde de travail.

7. Utilisation du procédé selon l'une quelconque des revendications 1 à 6 pour séparer des pièces en verre, dans laquelle la position du foyer de laser est guidée au cours de l'usinage entre deux pièces en verre contiguës ou plus le long d'une face de séparation ou d'un point de rupture théorique.

8. Dispositif pour usiner une pièce (4) transparente, avec
- un laser (1), qui émet un rayon laser (2) à une longueur d'onde de travail réglable, et
- une optique d'injection (3, 6), qui injecte le rayon laser (2) dans le volume de la pièce (4) et le concentre dans un foyer de faisceau laser se trouvant dans le volume de la pièce (4),
**caractérisé par**
- un système de mesure (8), qui mesure l'absorption linéaire du rayonnement laser dans la pièce (4), et
- un système de commande (7) relié au laser (1), au système de mesure (8) et à l'optique d'injection (3, 6), qui est mis au point pour régler la longueur d'onde de travail sur une valeur, à laquelle l'absorption linéaire est modérée, et pour faire varier la position du foyer de faisceau laser pendant l'usinage de la pièce (4).

9. Dispositif selon la revendication 8, **caractérisé en ce que** le laser (1) émet le faisceau laser (2) lors de l'usinage avec une intensité, à laquelle une absorption non linéaire, en particulier une ionisation, se produit dans le foyer de faisceau laser.
